Europäisches Patentamt

European Patent Office

Office européen des brevets

(19)

(11) Veröffentlichungsnummer: **0 515 884 A1**

# (12) EUROPÄISCHE PATENTANMELDUNG

(21) Anmeldenummer: **92107851.5**

(22) Anmeldetag: **09.05.92**

(51) Int. Cl.5: **B29C 67/18**, B29C 43/18

(30) Priorität: **18.05.91 DE 4116448**

(43) Veröffentlichungstag der Anmeldung:
**02.12.92 Patentblatt 92/49**

(84) Benannte Vertragsstaaten:
**CH DE ES FR GB IT LI**

(71) Anmelder: **Georg Karstens GmbH Fabrik für Messgeräte und Spezialmaschinen
Senefelder Strasse 19
W-7302 Ostfildern 1 - Ruit(DE)**

(72) Erfinder: **Keefer, Hermann
Adolf-Kolping-Weg 32
W-7250 Leonberg(DE)**

(74) Vertreter: **Hosenthien, Heinz, Dr.-Ing.
Dipl.-Ing. et al
Patentanwälte Dreiss, Hosenthien, Fuhlendorf, Leitner & Steimle, Gerokstrasse 6
W-7000 Stuttgart 1(DE)**

(54) Vorrichtung zur Beschichtung eines Maschinenbetts einer Werkzeugmaschine, insbesondere einer Schleifmaschine.

(57) Um eine durchbiegungsbedingte Abweichung von der idealen Form der Oberfläche einer Beschichtung (6,7) eines Maschinenbetts (1) zu vermeiden, wird die Matrize (12) bzw. ein sie tragender Formbalken (11) mit seitlich abstehenden Stützflächen oder Stützleisten (18,19) versehen, die auf aufgeblasene schlauchartige Stützelemente (14,15) am Maschinenbett (1) oder nahe desselben in vorgegebenem Höhen- und Seitenabstand angebracht sind, abgesenkt. Durch Reduzierung des Füllgrades zumindest in den schlauchartigen Stützelementen (14,15) erreicht man ein durchbiegungsfreies Absenken und Halten der Matrize (12) über der Patrize (13) bzw. auf dem Beschichtungsmaterial. Man vermeidet dadurch Abweichungen von der Idealform der Gleit- und Führungsflächen des Maschinenbetts.

EP 0 515 884 A1

Die Erfindung bezieht sich auf eine Vorrichtung zur Beschichtung eines Maschinenbetts einer Werkzeugmaschine, insbesondere einer Schleifmaschine, mit einem entlang dem Maschinenbett verfahrbaren Werkstück oder ein Bearbeitungswerkzeug tragenden Schlitten auf einer Gleitschicht des Maschinenbetts gleitet und die Oberfläche der Gleitschicht mittels einer absenkbaren Matrize geformt wird, und wobei die zu beschichtende Oberfläche des Maschinenbetts zumindest einen Teil der zugehörigen Patrize bildet oder umgekehrt. Wenn das Maschinenbett an seiner die Führungen, insbesondere für den das Werkstück tragenden Schlitten aufweisenden Oberseite fertig bearbeitet ist, so bringt man zumindest im Bereich der Führungen eine zunächst noch formbare bspw. teigige Masse auf, welche nach der Formgebung aushärtet. Die Formgebung und auch die Dicke dieser Gleitschicht erreicht man mit Hilfe einer absenkbaren Matrize, welche dem Maschinenbett so weit angenähert wird bis die gewünschte Gleitschichtdicke erreicht ist. Hierbei wird selbstverständlich ein ggf. vorhandener Schwund beim Trocknen mitberücksichtigt.

Aus dem Vorstehenden ergibt sich indirekt, daß die Matrize und die Patrize zumindest im Bereich der Führungen gleiche Querschnittsform aufweisen. Selbstverständlich sorgen geeignete Einführungselemente für eine korrekte Zuordnung der Matrize zum Maschinenbett sowohl in Längs- als auch in Querrichtung. Die Matrize ist sehr stabil und dementsprechend schwer, weswegen sie mit Hilfe eines Krans abgesenkt werden muß. Andererseits ist aber aufgrund der teilweise nicht unbeträchtlichen Länge ein Durchbiegen der Matrize unter ihrem Eigengewicht nicht auszuschalten. Auch wenn diese Durchbiegung nur Bruchteile von Millimetern beträgt, so ist dies doch mit dem Nachteil einer nicht ganz ebenen Führung verbunden. Die bekannte Matrize stützt sich nämlich nach dem Freigeben vom Kran über ihre beiden Schmalseiten ab, die auf entsprechenden Stützelementen des Maschinenbetts aufliegen.

Es liegt nun die Aufgabe vor, die Vorrichtung zur Beschichtung eines Maschinenbetts der eingangs beschriebenen Art so weiterzubilden, daß unter Beibehaltung des Beschichtungsprinzips absolut ebene Führungen erzielbar sind. Hierbei ist selbstverständlich unterstellt, daß die Matrize in den entsprechenden Bereichen selbst absolut eben ist. "Eben" bedeutet aber nicht, daß die betreffende Führungsfläche flach sein und in einer horizontal Ebene verlaufen muß. Selbstverständlich sollten die Führungen in bekannter Weise gestalten sein, wobei z.B. beim Ausführungsbeispiel eine ebene Wange und eine im Querschnitt V-förmige Längsführung mit ebenen Seitenwangen vorhanden sind.

Zur Lösung dieser Aufgabe wird erfindungsgemäß vorgeschlagen, daß die Vorrichtung gemäß dem Oberbegriff des Anspruchs 1 entsprechend dem kennzeichnenden Teil dieses Anspruchs ausgebildet ist. Weil nunmehr die Matrize nach dem Freigeben vom Kran oder dgl. beim Absenken an ihren Längsrändern abgestützt ist, wobei die Abstützung vorzugsweise ununterbrochen über die gesamte Länge erfolgt, verhindert man effektvoll das Durchbiegen der Matrize und infolgedessen bleibt die geometrische Form der Matrize beim Zusammendrücken der Beschichtungsmasse unverändert erhalten. Die Matrize kann man im Bereich ihrer Druckflächen mit hoher Genauigkeit herstellen und diese Genauigkeit wird dann auf die Oberfläche der Beschichtung ohne Form- und damit auch ohne Qualitätsverlust übertragen. Man erhält somit forderungsgemäß optimale Führungen. Diese sind dann insbesondere für eine hydrostatische Lagerung eines Schlittens der Werkzeugmaschine bzw. Schleifmaschine geeignet.

Die schlauchartigen Stützelemente müssen so dimensioniert sein, daß sich die Stützelemente der Matrize darauf optimal abstützen können. Der maximale Innendruck ist entsprechend dem Gewicht der Matrize festzulegen. Durch langsames Reduzieren des Füllgrades kann man die Matrize gegen das Maschinenbett hin absenken. Wenn die gewünschte Dicke der Beschichtung erreicht ist, wird der Füllgrad in den schlauchartigen Stützelementen konstant gehalten. Sobald die Beschichtung ausgehärtet ist, kann die Matrize abgehoben werden. Eine Nachbearbeitung der Gleitflächen der Gleitschicht ist nicht notwendig, weil die Oberfläche der Matrize in den die Führungen abformenden Bereichen absolut glatt ist.

Eine Weiterbildung der Erfindung sieht vor, daß auch an den Querrandbereichen der Matrize je eine Stützfläche oder Stützleiste angebracht und jeder ein schlauchartiges Stützelement am Querbereich des Maschinenbetts zugeordnet ist. Damit läßt sich die Matrize ringsum abstützen.

Gerade im letzteren Falle ist es dann besonders vorteilhaft, daß alle aufblasbaren Stützelemente zu einer pneumatischen Einheit zusammengefasst sind. Dies ist aus Steuerungsgründen aber auch dann zweckmäßig, wenn eine Querabstützung nicht vorhanden ist.

Eine besonders bevorzugte Ausführungsform ist durch eine Grob- und eine Feinabsenkvorrichtung gekennzeichnet, wobei die Feinabsenkvorrichtung etwa am Ende des Senkhubs der Grobabsenkung einschaltbar ist. Nach der Übergabe der Matrize an die aufblasbaren Stützelemente wird zunächst mit der Großabsenkvorrichtung der Großteil der Absenkbewegung bewirkt. Anschließend oder auch zeitlich etwas überlappend erfolgt dann die Feinabsenkung, wobei insbesondere vorgesehen ist, daß erst bei der Feinabsenkung die Matrize auf der Beschichtungsmasse auftrifft. Zweckmäßigerweise verwendet man sowohl für die Grob- als auch die Feinabsenkung jeweils pneumatische Elemente bspw. pneumatische Arbeitszylinder, weil man für die Stützelemente ohnehin Druckluft benötigt.

Eine weitere Variante der Erfindung ergibt sich aus Anspruch 5. Sie gewährleistet eine vollautomatische Steuerung für das Absenken und vorzugsweise auch das anschließende Hochheben der Matrize nach dem Aushärten der Beschichtungsmasse. Die Abstandsmessung erfolgt an geeigneter Stelle und es können hier alle bekannten Abstandsmeßvorrichtungen bspw. auch mechanische verwendet werden. Sobald sich die Matrize im vorgesehenen Abstand über dem Maschinenbett befindet, wird das Ablassen der Druckluft aus den aufblasbaren Stützelementen beendet. Die Abstandsmeßvorrichtung kann bspw. direkt oder indirekt über eine zwischengeschaltete Steuerung ein Ablassventil steuern bzw. schließen. Dies ist mit bekannten Steuerungselementen zu bewerkstelligen, weswegen die Steuerung im Einzelnen nicht dargestellt ist. Aus diesem Grunde kann man auch auf eine detailliertere Beschreibung verzichten.

Verfahrensmäßig läuft die Beschichtung des Maschinenbetts wie folgt ab. Auf die Oberseite des Maschinenbetts wird, insbesondere im Bereich der späteren Führungen, eine Beschichtungsmasse aufgebracht. Die Dicke übertrifft dabei die gewünschte Stärke der fertigen Beschichtung. Nunmehr senkt man die über dem Maschinenbett befindliche und bereits ausgerichtete Matrize ab. Zuvor sind sowohl die Grob- als auch die Feinabsenkvorrichtung in ihre oberste Endlage gebracht worden. Wenn die Matrize auf den aufblasbaren Stützelementen aufgetroffen ist, wird zunächst die Grobabsenkvorrichtung betätigt. Dabei nähert sich dann die Matrize der aufgebrachten Masse des Maschinenbetts. Anschließend oder ggf. auch zeitlich etwas überlappend wird dann die Feinabsenkvorrichtung betätigt, bis die Matrize auf der Beschichtungsmasse auftrifft und diese soweit zusammendrückt bis die vorgesehene Beschichtungsdicke
- unter Berücksichtigung des Schwunds beim Trocknen - erreicht ist. Wenn letzteres der Fall ist, wird auch die Feinabsenkvorrichtung abgeschaltet. Nach dem Aushärten der Masse erfolgt das Abheben der Matrize, was bswp. mit Hilfe zumindest der Grobabsenkvorrichtung bewerkstelligt werden kann. Gleichzeitig oder zeitversetzt kann man dabei auch die Feinabsenkvorrichtung wieder in die obere Ausgangsstellung bringen. Danach wird die Matrize in ihre endgültige Ausgangslage gebracht, sofern sie diese beim Hochheben nicht schon erreicht hat.

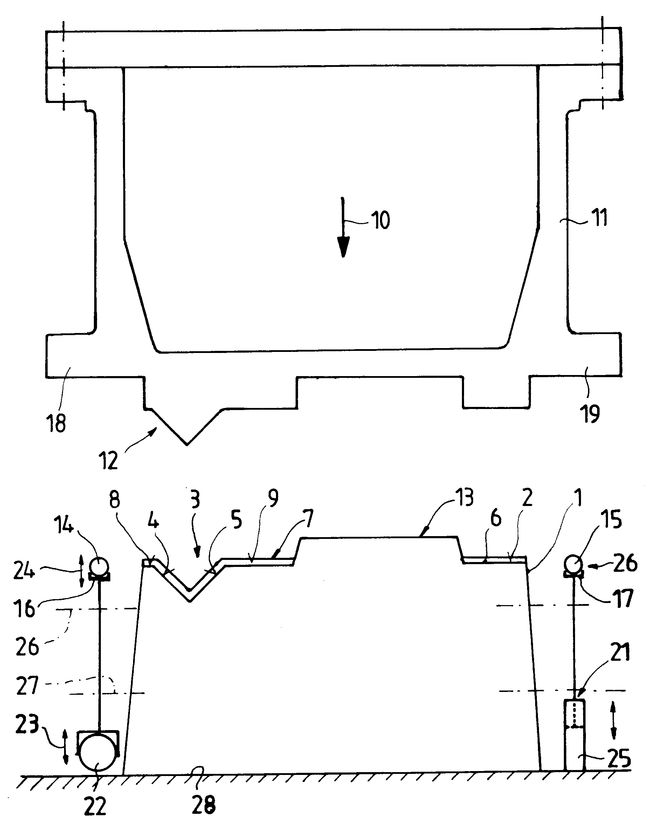

Die Erfindung wird nachstehend anhand der Zeichnung näher erläutert. Die Zeichnung zeigt in einer Seitenansicht schematisiert die Vorrichtung mit dem Maschinenbett.

Auf einem Maschinenbett 1 einer Werkzeugmaschine, vorzugsweise einer Schleifmaschine, ist senkrecht zur Blattebene ein Schlitten verfahrbar, welcher vorzugsweise das Werkstück trägt. Dieses wird mittels einer in diesem Falle orstfesten drehbar angetriebenen Schleifscheibe bearbeitet, d.h. die Schleifmaschine ist in diesem Falle eine Rundschleifmaschine. Der Schlitten oder dgl. wird entlang einer bekannten Maschinenbettführung mittels eines herkömmlichen Antriebs verschoben. Diese Führung gewährleistet eine spielfreie Verschiebung des Schlittens und sie besteht vorzugsweise aus einer ebenen Führungswange 2 und einem im Querschnitt V-förmigen Führungsteil 3. Letzterer setzt sich seinerseits aus zwei den V-Winkel bildenden ebenen Führungsflächen 4 und 5 zusammen. Zumindest diese drei Führungsflächen sind mit einem bekannten Überzug beschichtet. Die Beschichtung ist mit den Bezugszahlen 6 und 7 versehen. Der Beschichtungsteil 6 ist eben und seine Abmessungen entsprechen beim Ausführungsbeispiel etwa denjenigen der ebenen Führungswange 2. Der Beschichtungsteil 7 reicht beidseits über den im Querschnitt V-förmigen Führungsteil 3 hinaus. Er erstreckt sich auch über die angrenzenden flachen, vorzugsweise in Verlängerung der Führungswange 2 verlaufenden ebenen Maschinenbettflächen 8 und 9.

Auf die genannten Bereiche wird eine Beschichtungsmasse aufgetragen, deren Stärke zunächst größer ist als die endgültige Stärke der Beschichtung 6 und 7. Es handelt sich dabei in bekannter Weise um ein Kunstharzgemenge mit Zusätzen. Denkbar ist auch jedes andere, als Gleitfläche geeignete, auftragbare und aushärtbare Beschichtungs- insbesondere Kunststoffmaterial.

Um eine ebene und absolut glatte sowie geschlossene Oberfläche der Beschichtung 8,9 zu erreichen - wobei sich der Begriff "eben" auf jede der verschiedenen Teilflächen der Beschichtung bezieht - wird das Beschichtungsmaterial wie gesagt dicker aufgetragen als die endgültige Dicke der Schicht sein soll. Mit Hilfe eines über dem Maschinenbett befindlichen bzw. dorthin gebrachten, im Sinne des Pfeils 10 absenkbaren Formbalkens erreicht man die endgültige Gestalt und Dicke der Beschichtung 6,7. Der Formbalken 11 trägt an seiner unteren, dem Maschinenbett 1 zugewandten Fläche eine Matrize 12. Demgemäß bildet die Oberseite des Maschinenbetts die zugehörige Patrize 13. Geeignete, nicht näher dargestellte Zentriermittel gewährleisten beim Absenken die genaue Zuordnung der Matrize zur Patrize sowohl in Längsrichtung - senkrecht zur Blattebene betrachtet - als auch in Querrichtung, d.h. in Richtung der Breite des Formbalkens 11. Die prägende Oberfläche der Matrize ist von hoher Genauigkeit und besonderes feiner Beschaffenheit. Beim Eindrükken der Matrize in das auf der Patrize aufliegende Beschichtungsmaterial fließt der Überschuß über die Enden des Maschinenbetts und/oder geeignete Kanäle ab. Eine nicht näher gezeigte Einrichtung gewährleistet, daß sich die Matrize der Patrize nur soweit nähern kann bis die gewünschte Stärke der Beschichtung - unter Berücksichtigung eines nachfolgenden Schwunds beim Aushärten - erreicht ist. Hierzu ist jede bekannte Abstandsmeßvorrichtung geeignet bspw. ein Fühler oder dgl. am Formbalken der auf einer entsprechenden Gegenfläche des oberen Bereichs des Maschinenbetts 1 auftrifft.

Das Absenken des Formbalkens 11 geschieht zunächst mit Hilfe eines Krans, weil der Formbalken ein erhebliches Gewicht aufweist. Er wird dann erfindungsgemäß an wenigstens ein aufblasbares schlauchartiges Stützelement übergeben. Beim Ausführungsbeispiel erstreckt sich in geeignetem Seitenabstand und auf dem notwendigen Höhenniveau beidseits jedes Längsbereichs des Maschinenbetts ein solches schlauchartiges Stützelement 14 bzw. 15. Jedes befindet sich in einer symbolisch dargestellten Aufnahme 16 bzw. 17.

Der Formbalken 11 bzw. die Matrize 12 besitzt beim Ausführungsbeispiel gegenüberliegend von jedem Stützelement 14 bzw. 15 eine seitlich vorstehende, sich quer zur Absenkrichtung 10 erstreckende Stützleiste 18 bzw. 19.

Die Höhenlage der schlauchartigen Stützelemente 14 und 15, welche pneumatisch miteinander verbunden sein können ist nun so gewählt, daß bei aufliegenden Stützleisten 18 und 19 die Matrize 12 noch nicht in das Beschichtungsmaterial eingedrungen ist. Der Formbalken wird nun vom Kran freigegeben und liegt anschließend lediglich noch auf den Stützelementen 14 und 15 auf. Aufgrund dieser Längsabstützung ist eine Durchbiegung unter dem Eigengewicht ausgeschlossen. Das weitere Absenken des Formbalkens 11 und damit auch der Matrize 12 erreicht man zumindest durch eine Verringerung des Füllgrades in den schlauchartigen Stützelementen 14 und 15. Beim Ausführungsbeispiel ist allerdings vorgesehen, daß außer dieser Feinabsenkvorrichtung 20 noch eine Grobabsenkvorrichtung 21 vorhanden ist. In diesem Falle wird zunächst letztere betätigt um die Matrize bis nahe an das Beschichtungsmaterial oder gar bis zum Auftreffen auf letzterem zu bringen. Anschließend wird dann über die Betätigung der Feinabsenkvorrichtung, d.h. durch Reduzierung des Füllgrades in den schlauchartigen Stützelementen 14 und 15 die endgültige Annäherung der Matrize an die Patrize bewirkt.

Gemäß der schematischen Darstellung in der Zeichnung kann man als Grobabsenkvorrichtung ebenfalls schlauchartige Stützelemente 22 vorsehen, die dann allerdings einen größeren Hub 23 gewährleisten als diejenigen der Feinabsenkvorrichtung 20, deren Hub mit 24 bezeichnet ist. Statt dessen kann man aber auch gemäß der Darstellung am rechten unteren Bildende einen herkömmlichen Hubzylinder, insbesondere einen pneumatischen Arbeitszylinder 25 vorsehen.

Die angehobene Endstellung der schlauchartigen Stützelemente 14 und 15 ist bei gesteuerter Absenkung bzw. vollautomatischer Beschichtung dem Maschinenbett 1 in genau vorgegebener Weise zugeordnet, was durch die strichpunktierten Linien 26 und 27 symbolisiert wird. Als Bezugsgröße kann man auch den Hallenboden 28 oder dgl. heranziehen. Nach dem Aushärten der Beschichtung kann man in vorteilhafter Weise den Formbalken 11 zunächst mit Hilfe der Grobabsenkvorrichtung 21 und/oder der Feinabsenkvorrichtung 20 von der ausgehärteten Beschichtung abheben. Anschließend wird er wieder vom Kranhaken übernommen und soweit erforderlich seitwärts weggebracht.

## Patentansprüche

1. Vorrichtung zur Beschichtung eines Maschinenbetts (1) einer Werkzeugmaschine, insbesondere einer Schleifmaschine, mit einem entlang dem Maschinenbett verfahrbaren Werkstück oder ein Bearbeitungswerkzeug tragenden Schlitten auf einer Gleitschicht (6,7) des Maschinenbetts (1) gleitet und die Oberfläche der Gleitschicht (6,7) mittels einer absenkbaren Matrize (12) geformt wird, und wobei die zu beschichtende Oberfläche (2,4,5,8,9) des Maschinenbetts (1) zumindest einen Teil der zugehörigen Patrize (12) bildet oder umgekehrt, **dadurch gekennzeichnet,** daß die Matrize (12) wenigstens an ihren Längsrandbereichen je eine sich quer zur Absenkrichtung (10) erstreckende, seitlich vorstehende Stützfläche oder Stützleiste (18,19) trägt, denen je ein aufblasbares schlauchartiges Stützelement (14,15) an oder nahe jedem Längsbereich des Maschinenbetts (1) zugeordnet ist, wobei der Füllgrad zur gesteuerten Absenkung der Matrize (12) reduzierbar ist.

2. Vorrichtung nach Anspruch 1, dadurch gekennzeichnet, daß auch an den Querrandbereichen der Matrize (12) je eine Stützfläche oder Stütztleiste angebracht und jeder ein schlauchartiges Stützelement am Querbereich des Maschinenbetts zugeordnet ist.

3. Vorrichtung nach Anspruch 1 oder 2, dadurch gekennzeichnet, daß alle aufblasbaren Stützelemente (14,15) zu einer pneumatischen Einheit zusammengefasst sind.

4. Vorrichtung nach wenigstens einem der vorhergehenden Ansprüche, gekennzeichnet durch eine Grob- (21) und eine Feinabsenkvorrichtung (20), wobei die Feinabsenkvorrichtung etwa am Ende des Senkhubs der Grobabsenkung einschaltbar bzw. betätigbar ist.

5. Vorrichtung nach wenigstens einem der vorhergehenden Ansprüche, gekennzeichnet durch eine Abstandsmeßvorrichtung für die Matrizenabsenkbewegung (10), die einen Teil einer pneumatischen Steuerung für die aufblasbaren Stützelemente (14,15) bildet, wobei einem Mindestabstand von Maschinenbett (1) und Matrize (12) die Sperrstellung eines oder der Ablassventile der Stützelemente zugeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 12, no. 105 (M-681)(2952) 6. April 1988 & JP-A-62 236 640 ( AMADA CO LTD ) * Zusammenfassung * --- | 1-5 | B29C67/18 B29C43/18 |
| A | DE-A-3 813 882 (GENERAL ELECTRIC PLASTICS BV) * Anspruch 1; Abbildung 1 * --- | 1-5 | |
| A | US-A-4 889 676 (ROSENBERG ET AL) * Anspruch 1; Abbildung 3 * ----- | 1-5 | |

| | | | RECHERCHIERTE SACHGEBIETE (Int. Cl.5) |
|---|---|---|---|
| | | | B29C B23Q |

Der vorliegende Recherchenbericht wurde für alle Patentansprüche erstellt

| Recherchenort | Abschlußdatum der Recherche | Prüfer |
|---|---|---|
| DEN HAAG | 16 SEPTEMBER 1992 | KIRSTEN K.R.M. |